Europäisches Patentamt

European Patent Office

Office européen des brevets

(11) Publication number: **0 081 594**
**A1**

(12) **EUROPEAN PATENT APPLICATION**

published in accordance with Art. 158(3) EPC

(21) Application number: 82901855.5

(22) Date of filing: 17.06.82

Data of the international application taken as a basis:

(86) International application number: PCT/JP 82/00232

(87) International publication number: WO 82/04506 (23.12.82 82/30)

(51) Int. Cl.³: **H 02 P 7/00, F 16 F 15/18**

(30) Priority: 17.06.81 JP 92155/81

(43) Date of publication of application: 22.06.83 Bulletin 83/25

(84) Designated Contracting States: FR

(71) Applicant: YASKAWA ELECTRIC MFG. CO., LTD., 2346, Ohaza Fujita Yahatanishi-ku, Kitakyushu-shi Fukuoka 806 (JP)

(72) Inventor: FUTAMI, Shigeru Yaskawa Electric Mfg. Co., Ltd., 2346, Ohaza Fujita Yahatanishi-ku, Kitakyushu-shi Fukuoka 806 (JP)
Inventor: KYURA, Nobuhiro Yaskawa Electric Mfg. Co., Ltd., 2346, Ohaza Fujita Yahatanishi-ku, Kitakyushu-shi Fukuoka 806 (JP)

(74) Representative: Lecca, Jean et al, CABINET PLASSERAUD 84, rue d'Amsterdam, F-75009 Paris (FR)

(54) **CONTROL SYSTEM FOR A MOTOR DRIVEN MACHINE.**

(57) A control system for a motor driven machine producing a detrimental continuous vibration driven by a drive motor for detecting an electric signal proportional to the acceleration of the vibration of a vibrating member, converting the electric signal into a correction signal of an adequate phase for attenuating the vibration via a phase control circuit and a gain control circuit and applying it to the controller of the drive motor.

EP 0 081 594 A1

0081594

- 1 -

SPECIFICATION

CONTROL SYSTEM OF AN ELECTRICALLY-DRIVEN MACHINE

TECHNICAL FIELD

This invention relates to a control system to increase operability in an electrically-driven machine.

In electrically-driven machines, a resonance phenomenon occurs between the torque ripple and the machine vibration system due to individual factors, resulting in vibration. Although a certain amount of vibration is not a major operational problem in electrically-driven machines for use in ordinary industry, it is necessary to reduce harmful vibrations as much as possible in high-accuracy electrically-driven machines operating blades or tools with high accuracy since operating vibration affects accuracy.

BACKGROUND ART

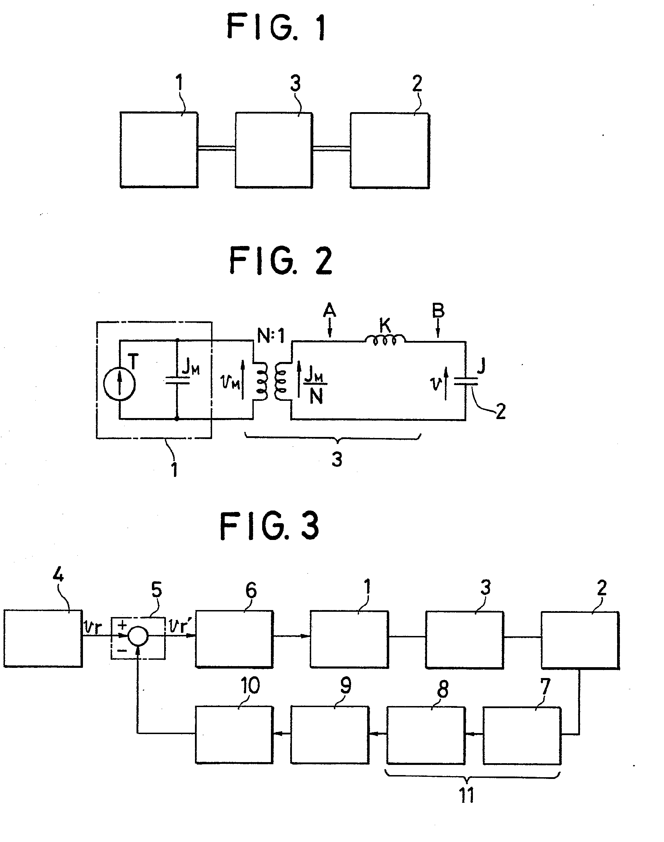

There are various sources which cause vibration in electrically-driven machines; among them, is, for example, a reducer 3 interposed between a driving motor 1 and a load 2 as shown in FIG. 1.

The term "reducer" used herein means a reducer which uses a gear, belt, chain, wire, ball screw, etc., or a harmonic drive component (a kind of gear reducer) or the like.

In such reducers, a parameter fluctuation of integer multiple times or one-to-integer multiple times the rotating speed of the driving motor 1 occurs due to reasons of construction, and the compelling power of this parameter fluctuation causes the machinery system to forcibly vibrate.

Because of this, even if the driving motor 1 is rotated accurately at a constant speed, the ripple occurs in the torque to be transmitted to the load 2, so that it is impossible to smoothly and highly accurately move blades and tools.

Furthermore, since the torque ripple due to the parameter fluctuation of this reducer 3 becomes the cyclical compelling power to cause the resonance phenomenon with the machinery vibration system comprising the reducer 3 and the load 2, there follows a basic problem with regard to mechanical performance or practical use.

FIG. 2 shows an equivalent electric circuit of such an electrically-driven machine as shown in FIG. 1, in which the above-mentioned reducer 3 is approximated to an ideal transformer and a spring.

In FIG. 2, T, $J_M$, $V_M$, N, K, J, and V, respectively, denote occurrence torque of the motor 1, motor inertia, motor speed, reduction ratio of the reducer 3, equivalent spring constant of the reducer 3, load inertia, and load velocity.

Since it is common that the rigidity of the reducer section is lowest in the entire machinery system, the spring constant in this equivalent electric circuit is expressed by K, and the spring constants of other sections are considered to be infinity ∞.

The torque ripple caused by the parameter fluctuation of the reducer section is applied to the position indicated by (A) or (B) of FIG. 2, and resonance occurs if this ripple has a frequency component which is equal to the natural frequency $f_n$ of the machinery vibration system:

$$f_n = \frac{1}{2\pi}\sqrt{\frac{K}{J}} \qquad \ldots (1)$$

If J = C, and K = $\frac{1}{L}$ , $f_n$ is expressed as follows:

$$f_n = \frac{1}{2\pi}\sqrt{\frac{1}{LC}} \qquad \ldots (2)$$

Conventionally, to prevent such resonance phenomenon, a dumper has been interposed on the load side, or the machine has been prohibited from

0081594

- 4 -

being used at the rotating speed at which resonance occurs, or the like; however, the former method requires mechanical or systematic modification, while the latter method has limitations in use, resulting in inconvenience.

The present invention therefore contemplates provision of proposal of new method for allowing the driving motor itself to act as a dumper.

## DISCLOSURE OF THE INVENTION

The present invention provides a control system in an electrically-driven machine to be driven by a driving motor which causes continuous harmful vibrations, in which an electric signal proportional to the acceleration of the vibration at the vibrating section is detected by way of a vibration acceleration detector, and this electric signal is converted into a correction signal having a phase which is appropriate to attenuate the vibration by means of a phase regulator and a gain regulator, then this signal is given to the control unit of the driving motor to attenuate the vibration.

The present invention has characteristics such that:

    i)   no mechanical or systematic modification is required, and

ii)  only an acceleration detector and a simple electric circuit are added, and these devices are all signalling circuits (not power circuits).

Therefore, the invention can be easily and cheaply realized, and is superior as a control system for electrically-driven machines in operation.


BRIEF DESCRIPTION OF THE DRAWINGS

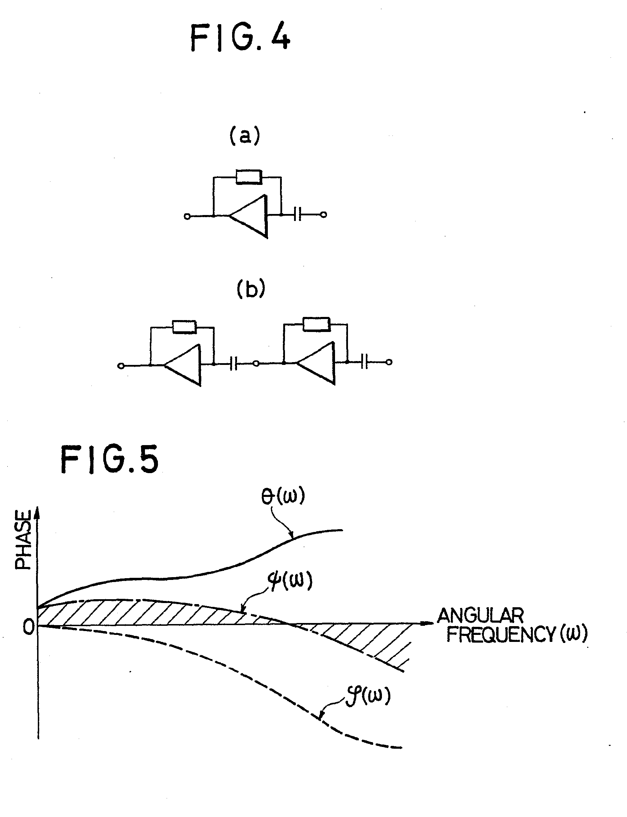

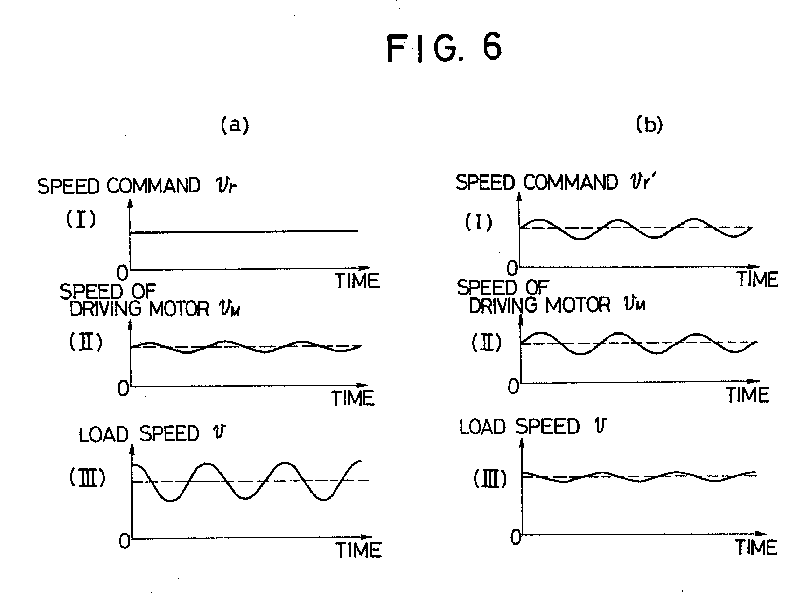

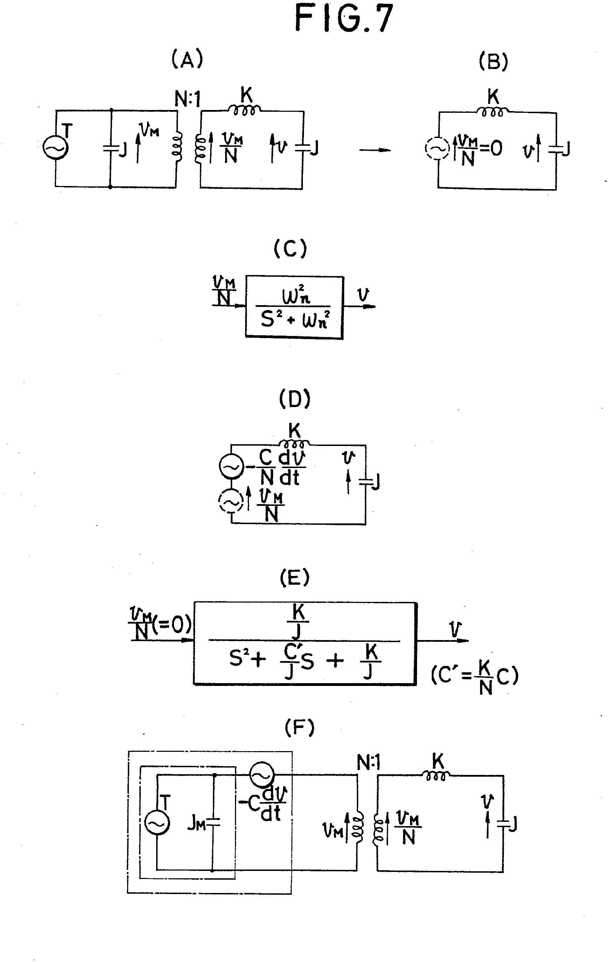

FIG. 1 is a block diagram of an electrically-driven machine, FIG. 2 is its equivalent electric circuit, FIG. 3 is a block diagram of an embodiment of the present invention, FIG. 4 is an electric circuit diagram of a vibration acceleration converter, FIG. 5 is a phase characteristic drawing of a correction signal, FIG. 6 is a drawing for describing its operation, and FIG. 7 is a drawing for describing the principle of the invention.

1 ... driving motor,

2 ... load,

3 ... reducer,

4 ... speed commanding device,

5 ... subtracter,

6 ... speed control unit,

7 ... vibration detector,

8 ... vibration acceleration converter,

9 ... phase regulator,

10 ... gain regulator.


### PREFERRED EMBODIMENT

An embodiment of the present invention will be described below with reference to the drawings.

FIG. 3 is a block diagram of an embodiment of the present invention, in which 1 indicates a driving motor, which is driven through a subtracter 5 and a speed control unit 6 in accordance with a speed command signal $V_r$ from a s p e e d commanding device 4. 2 and 3 denote a load and a reducer, respectively.

The apparatus of this embodiment differs from a conventional control system in terms of the following points: i.e., there are provided a vibration detector 7 for detecting the vibration of the load 2, a vibration acceleration converter 8 for detecting the acceleration of the vibration from its output signal, a phase regulator 9 for regulating the phase of its output signal, a gain regulator 10, and said subtracter 5; an electric signal proportional to the vibration acceleration at the vibrating section is detected by way of a vibration acceleration detector 11, i.e., the vibration detector 7 and the vibration acceleration converter 8, and this signal is converted into a correction signal (which will be described later) having a phase which is appropriate to attenuate the vibration of said vibrating section by way of the phase and gain regulators 9 and 10, and then this correction signal is given to the subtracter 5.

For said vibration detector 7, any detector may be used which electrically detects either the vibration speed $\dot{x}$ or the displacement x of the load 2.

For the vibration acceleration converter 8, any converter may be used which converts the input signal into an electric signal proportional to the vibration acceleration $\ddot{x}$, and for said vibration detector 7, any detector may be used which detects the speed $\dot{x}$ of the vibration; that is, such a differential circuit as shown in FIG. 4(a) may be used which comprises an operational amplifier, a resistor and a capacitor. In the event of using a detector which detects the displacement x as the vibration detector 7, such a two-stage differential circuit as shown in FIG. 4(b) may be used.

The vibration acceleration converter 8 is unnecessary if the vibration detector 7 detects the vibration acceleration $\ddot{x}$.

- 8 -

The phase regulator 9 serves to compensate the phase characteristic of the driving motor 1.

This phase regulator 9 regulates the phase characteristic $\phi(\omega)$ of the output signal so that

$$\phi(\omega) = \theta(\omega) + \mathcal{Y}(\omega), \qquad \ldots (3)$$

where $\theta(\omega)$ is a phase difference between the output of the acceleration converter 8 and the acceleration $\ddot{x}$ of the load vibration, and $\mathcal{Y}(\omega)$ is the phase characteristic of the driving motor to be driven by the speed control unit 6 of the driving motor.

This means that the phase of a correction signal to be given to the control unit of the driving motor 1 is inverted to that of the acceleration $\ddot{x}$ of the load vibration to attenuate the vibration.

These phase relationships are shown in FIG. 5.

In the case where an accelerometer is used as the vibration detector 7, and where neither of the phase lags of the driving motor 1 at the resonance frequency and the detection signal by said accelerometer are caused, neither this phase regulator nor the vibration acceleration converter 8 as described previously is necessary.

The phase regulation of this phase regulator 9 takes place precisely only at the range of the frequencies (namely, near the resonance frequency).

where the vibration is critical in actual use.

The gain regulator 10 serves to determine the magnitude of a correction signal for attenuation of the vibration, and an operational amplifier, resistance type potential divider, variable resistor, or the like may be used for this purpose.

Next, the function and effect will be described.

FIG. 6(a) shows the response of the control system at the resonance frequency of a conventional- type electrically-driven machine. If it is assumed that a speed command of the driving motor 1 is set to a constant value so that the vibration caused by the parameter fluctuation of the reducer 3 coincides with the natural frequency of the machinery vibration system, the resonance occurs and the load 2 generates a large vibration, so that the speed of the driving motor 1 fluctuates slightly due to the influence of the load 2.

FIG. 6(b) shows the response of the system at the resonance frequency in the case where a correction signal for attenuating the vibration of the driving motor 1 is applied actively to the speed command with such a construction as shown in FIG. 3. In this case, the acceleration $\ddot{x}$ of the load vibration is added as the correction signal whose phase has been regulated so that it has an antiphase as compared with that of the AC component of the motor speed.

The load vibration at this time is remarkably small as is obvious from a comparison of FIG. 6(a)-(III) with FIG. 6(b)-(III).

In fact, it is possible to reduce the load vibration to zero.

The regulation is performed by the gain regulator 10 (manually). As the gain is increased, the vibration also reduces, but excessive gain causes racing. Therefore, it is regulated so that a maximum gain at which no racing is caused is selected.

Next, the principle of the invention will be described.

It has been already stated that the equivalent circuit of the electrically-driven machine which drives the load 2 by the driving motor 1 through the reducer 3 is as shown in FIG. 7(A) (refer to FIG. 2).

This circuit of FIG. 7(A) is expressed by the following differential equation:

$$K \int ( \frac{V_M}{N} - V )dt = J\frac{dv}{dt} \qquad \dots (4)$$

In the case where the driving motor 1 is stopped, namely, $V_M = 0$, the equivalent circuit on the secondary side (load side) is as shown in FIG. 7(B).

This circuit is a vibration system without attenuation, and its transfer function is as shown in FIG. 7(C), where $\omega_n = \dfrac{K}{J}$ .

Such a vibration system without attenuation continues the vibration for a long time if the vibration has once occurred for some reason or other.

On one hand, the transfer function of an ordinary vibration system is expressed by

$$\frac{\omega_n{}^2}{S^2 + 2\xi\omega_n S + \omega_n{}^2} \quad , \qquad \ldots (5)$$

where $\omega_n$ is a natural frequency of the system and $\xi$ is a damping coefficient, so it has an attenuation term. Now in the equivalent circuit of FIG. 7(B), it is assumed that the quantity of $-\dfrac{C}{N}\cdot\dfrac{dv}{dt}$ (acceleration of constant times that of the load) is interposed in place of $\dfrac{V_M}{N}$ (= 0) as shown in FIG. 7(D).

In this case, the differential equation of the vibration system is expressed by the following expression:

$$K \int (\frac{V_M}{N} - \frac{C}{N}\cdot\frac{dv}{dt} - V)\,dt = J\frac{dv}{dt} \, , \quad \ldots (6)$$

where $\dfrac{V_M}{N}$ is "0".

Thus, the transfer function of this expression is as shown in FIG. 7(E). From the relationship between this transfer function and the transfer function expressed by expression (5), we have

$$\xi = \frac{C'}{2\sqrt{KJ}} \cdot \qquad \dots (7)$$

This means that the attenuation term of $\xi = \dfrac{C'}{2\sqrt{KJ}}$ above appears by applying a signal $-\dfrac{C}{N} \cdot \dfrac{dv}{dt}$ in such an equivalent circuit on the secondary side (load side) as shown in FIG. 7(D).

This is equivalent to a signal $-C \cdot \dfrac{dv}{dt}$ being applied to the primary side (driving motor side) in FIG. 6(I).

I.e., this implies that the vibration can be attenuated by adding a correction signal $-C \cdot \dfrac{dv}{dt}$ to the speed control loop by detecting $\dfrac{dv}{dt}$ on the load side.

If this is considered in the equivalent circuit, it means that the vibration on the load side is attenuated with such a construction as shown in FIG. 7(F). The fundamental principle of the invention is as described above.

- 13 -

## INDUSTRIAL AVAILABILITY

However, since a phase lag actually exists in the vibration system, it is impossible to attenuate the vibration merely by adding the acceleration ( $C\frac{dt}{dv}$ ) of the vibration on the load side to the speed control loop as described above, it is necessary to compensate for this phase lag.

Therefore, to limit harmful vibration, it is necessary to add a correction signal so that it has an antiphase for the AC component of the driving motor speed at the power shaft of the driving motor 1.

Nevertheless, since phase lags appear in the acceleration detector and the speed control system of the driving motor, it is also necessary to further compensate for these phase lags. The phase regulator 9 serves to compensate for these phase lags.

Three methods of detecting the vibration are available: a method to detect the displacement x of the vibration; a method to detect the speed $\dot{x}$ of the vibration; and a method to detect the acceleration $\ddot{x}$ of the vibration.

To limit the vibration it is necessary to feed back the acceleration component of the vibration for control as described above, so that in the event of adopting the first or second method to detect the displacement x or the speed ẋ of the vibration, it is necessary to convert their detection values twice or once into acceleration signals of the vibration through the differential circuit. The vibration acceleration converter 8 in the above-mentioned embodiment is used for this purpose.

In this way, the method to limit the harmful vibration of electrically-driven machines has been explained with respect to the addition of a correction signal to the speed control system; however, a similar effect can be obtained even in electrically-driven machines of the position control system (ordinary servo system) by applying the same method to the speed control system in the position control system.

There are various frequency components in the vibration caused in the load of an electrically-driven machine; however, in the case where it is possible to achieve the object by merely controlling the remarkable frequency component, a vibration detector which selectively detects only a remarkable frequency component may be used, or a wide-range vibration detector may be used to which a band pass filter of low-pass or high-pass type which selectively passes only the above-mentioned frequency component is added.

In addition, when an electrically-driven machine is subject to disturbance or in a certain use condition, there is a case that the load vibration is remarkable. Therefore, in multi-use electrically-driven machines, it is an operationally effective method to add a correction signal when the need arises by interposing a selection switch.

CLAIMS

1. A control system of an electrically-driven machine driven by a driving motor which causes harmful continuous vibrations, comprising the steps of detecting an electric signal proportional to the acceleration of the vibration of a vibrating section by way of a vibration acceleration detector, converting said electric signal into a correction signal of a phase appropriate to attenuate the vibration by way of a phase regulator and a gain regulator, and adding said correction signal to a control unit of the driving motor.

2. The control system of an electrically-driven machine as claimed in claim 1, wherein said correction signal is given to a speed control regulator of the driving motor.

3. The control system of an electrically-driven machine as claimed in claim 1, wherein said correction signal is given to a position control regulator.

4. The control system of an electrically-driven machine as claimed in claim 1, wherein an acceleration detector is used which sends an electric signal proportional to the acceleration of the vibration of a particular frequency.

5. The control system in an electrically-driven machine as claimed in claim 1, wherein said correction signal is given through a selection switch.

# FIG. 1

# FIG. 2

# FIG. 3

# FIG.4

(a)

(b)

# FIG.5

# FIG. 6

(a)

SPEED COMMAND $v_r$

(I)

TIME

SPEED OF
DRIVING MOTOR $v_M$

(II)

TIME

LOAD SPEED $v$

(III)

TIME

(b)

SPEED COMMAND $v_r'$

(I)

TIME

SPEED OF
DRIVING MOTOR $v_M$

(II)

TIME

LOAD SPEED $v$

(III)

TIME

0081594

# FIG.7

(A)

$$\frac{V_M}{N}$$

N:1      K

T    J   $V_M$     $\frac{V_M}{N}$   $v$   J

→

(B)

K

$\frac{V_M}{N}=0$   $v$   J

(C)

$\frac{V_M}{N}$   $\boxed{\dfrac{W_n^2}{S^2 + W_n^2}}$   $v$

(D)

K

$-\dfrac{C}{N}\dfrac{dv}{dt}$    $v$   J

$\dfrac{V_M}{N}$

(E)

$\dfrac{V_M}{N}(=0)$   $\boxed{\dfrac{\dfrac{K}{J}}{S^2 + \dfrac{C'}{J}S + \dfrac{K}{J}}}$   $v$

$(C' = \frac{K}{N}C)$

(F)

N:1      K

T   $J_M$   $-C\dfrac{dv}{dt}$    $V_M$   $\dfrac{V_M}{N}$   $v$   J

# INTERNATIONAL SEARCH REPORT

International Application No. PCT/JP82/00232

0081594

## I. CLASSIFICATION OF SUBJECT MATTER (if several classification symbols apply, indicate all) [3]

According to International Patent Classification (IPC) or to both National Classification and IPC

Int. Cl.[3]  H02P 7/00, F16F 15/18

## II. FIELDS SEARCHED

| Minimum Documentation Searched [4] | |
|---|---|
| Classification System | Classification Symbols |
| I P C | H02P 7/00, F16F 15/18 |

| Documentation Searched other than Minimum Documentation to the Extent that such Documents are Included in the Fields Searched [5] | | |
|---|---|---|
| | Kokai Jitsuyo Shinan Koho | 1971 - 1982 |
| | Jitsuyo Shinan Koho | 1950 - 1982 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| A | JP,B1, 43-17476 (Siemens Schuckertwerke A.G.) 24. July. 1968 (24.7.68) | (1) - (5) |
| A | JP,U, 50-150714 (Jeco Co., Ltd.) 15. December. 1975 (15.12.75) | (1) - (5) |
| A | JP,A, 53-54673 (Xerox Co.) 18. May. 1978 (18.5.78) | (1) - (5) |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| September 13, 1982 (13.09.82) | September 20, 1982 (20.09.82) |

| International Searching Authority [1] | Signature of Authorized Officer [20] |
|---|---|
| Japanese Patent Office | |

Form PCT/ISA/210 (second sheet) (October 1981)